(19) Europäisches Patentamt
European Patent Office
Office européen des brevets

(11) **EP 1 887 439 A1**

(12) **EUROPEAN PATENT APPLICATION**
published in accordance with Art. 153(4) EPC

(43) Date of publication:
**13.02.2008 Bulletin 2008/07**

(51) Int Cl.:
*G03G 15/20* (2006.01)    *B29C 53/58* (2006.01)
*B29K 27/12* (2006.01)    *B29L 23/00* (2006.01)

(21) Application number: **06732604.1**

(22) Date of filing: **15.05.2006**

(86) International application number:
**PCT/JP2006/309673**

(87) International publication number:
**WO 2006/123620 (23.11.2006 Gazette 2006/47)**

(84) Designated Contracting States:
**DE FR GB**

(30) Priority: **17.05.2005 JP 2005144575**

(71) Applicant: **JAPAN GORE-TEX, INC.**
**Setagaya-ku**
**Tokyo 156-8505 (JP)**

(72) Inventor: **OYAMA, Shinro,**
**c/o JAPAN GORE-TEX INC.**
**Tokyo 1568505 (JP)**

(74) Representative: **Shanks, Andrew et al**
**Marks & Clerk**
**19 Royal Exchange Square**
**Glasgow**
**G1 3AE (GB)**

(54) **FLUORORESIN TUBE AND METHOD FOR PRODUCING THE SAME**

(57) A fluororesin tube 30 of the present invention has a tensile strength of 80 N/mm$^2$ or more in both of the circumferential direction and the axial direction. The fluororesin tube 30 is produced by winding with two or more turn of a fluororesin film 20 having a thickness T of 2.5 $\mu$m or less (particularly 2.0 $\mu$m or less) to form a lamination. At least an outermost layer of the tube is fused to a layer immediately thereunder and a rising height H of the fluororesin film at the end-of-winding side 21 is always 0.1 $\mu$m or more and 2.0 $\mu$m or less when measured at any position of the side 21. A level difference D of the end-of-winding side 21 of the fluororesin tube is preferably more than or equal to sum of the film thickness T and 0.1 $\mu$m, and less than or equal to 3.0 $\mu$m (particularly 2.3 $\mu$m) when measured at any position of the side 21.

Fig.3

Printed by Jouve, 75001 PARIS (FR)

EP 1 887 439 A1

**Description**

TECHNICAL FIELD

The present invention relates to a fluororesin tube which can be effectively utilized as components of an image fixing apparatus and the like, and a related art thereof.

BACKGROUND ART

In image fixing apparatuses such as an electrophotographic copier and a laser beam printer, an image (fixed image) is formed by a development step of depositing a toner on an electrostatic latent image formed on a photoconductor drum, thereby visualizing the electrostatic latent image; a transfer step of transferring the toner on a photoconductor drum onto a recording sheet (transfer material) such as paper to form a primary image; and a fixing step of treating the recording sheet on which the toner is deposited, using pressing and heating means [fixing members such as roll type pressing and heating means (fixing roll), belt type pressing and heating means for maintaining comparatively long fixing nip portion (fixing belt), etc.] thereby fixing the toner to the recording sheet. Particularly in case of color printing, plural colored toners (for example, CMYK-based toner comprising cyan, magenta, yellow and black) are laminated on a recording sheet for each color to form a primary image and a color is properly developed by heating while pressing with a fixing member to form a fixed image. As the fixing member for surely pressing and heating, those having an elastic layer (for example, soft roll, etc.) are used.

In the image fixing apparatus, it is one of important technical requirements to prevent deposition and accumulation of a toner on a fixing member (pressing and heating means) and, for example, deposition and accumulation of the toner are prevented by supplying a release oil to the fixing member. To achieve an improvement in stability of an apparatus, securement of high reliability, reduction of running cost and the like, it has recently been promoted that supply of the release oil is omitted and, alternatively, a wax toner having releasability in itself is used. However, if supply of the release oil is omitted, a surface layer of the fixing member is rapidly abraded. With speeding up of a copier and a laser printer, abrasion load of the fixing member tends to increase and it becomes a large technical problem to maintain lifetime of the fixing member. Particularly in a fixing member (soft roll, etc.) comprising an elastic layer used in a color image or the like, if the release oil is omitted, deterioration in surface abrasion proceeds more remarkably and, for example, scratch or abrasion may occur upon printing several hundreds of copies.

Therefore, in order to enhance abrasion resistance of the soft roll and to enhance releasability, there are proposed fixing rolls in which an external surface of an elastic layer is coated with a tetrafluoroethylene-perfluoloalkyl vinyl ether copolymer (PFA) tube (for example, Japanese Examined Patent Publication (Kokoku) No. 58-43740; Kitazawa, "Required characteristics and Technical Improvement Point of Fixing Rubber Roll", Journal of The Society of Electrophotography of Japan, 1994, Vol. 33, No. 1, p.57-65, etc.). Also, a PFA tube is used in a surface layer of a fixing belt. However, the PFA tube is produced by melt molding and it is difficult to reduce the wall thickness by an actual (industrial) production line. Although the wall thickness can be reduced to about 30 $\mu$m, it is difficult to reduce to about 20 $\mu$m or less. If the wall thickness of a PFA tube is experimentally reduced to about 20 $\mu$m, PFA has a low strength and deformation (wrinkle) or breakage occurs only by applying a small load, and thus handling property becomes insufficient. Furthermore, abrasion resistance also deteriorates, when the PFA tube having a reduced wall thickness is actually used for image fixation. There practically arises a problem that wrinkle is caused by deformation of the elastic layer and the wrinkle mark is shown up in a fixed image, and the other many problems. Taking practical use into consideration, it cannot help saying that it is difficult to reduce the wall thickness of a PFA tube.

To obtain a colored and fixed high quality image, it is required that the surface of a fixing member must be uniformly brought into contact with the entire primary image formed of laminated colored toners. It is also required to highly conform with the surface of the fixing member to fine irregularities of the surface of a recording sheet. However, since the PFA tube has poor elasticity and it is difficult to reduce the wall thickness, conformability to irregularities deteriorates and also image quality deteriorates. It is also required to enhance thermal conductivity of the fixing member and to decrease heat capacity of the fixing member so as to shorten a preheating time of the fixing member and to save power consumption. However, since it is difficult to reduce the wall thickness of a PFA layer on the surface, there arises a problem that thermal conductivity of a soft roll is decreased and heat capacity increases due to the PFA layer. To avoid deterioration of conformability to irregularities caused by the PFA layer and to avoid deterioration of image quality caused thereby, it is required that deterioration of elasticity of the roll is counterbalanced by increasing the thickness of the elastic layer, and thus heat capacity of the soft roll further increases. Since the wall thickness of the core material and elastic layer of the soft roll is recently reduced to the limitation level, an influence by the PFA layer relatively increases and the above problem becomes significant in the art.

Under these circumstances, the present invention has been made and an object thereof is to provide a fluororesin tube which can form a high quality image and is also excellent in abrasion resistance, and a related art thereof.

DISCLOSURE OF THE INVENTION

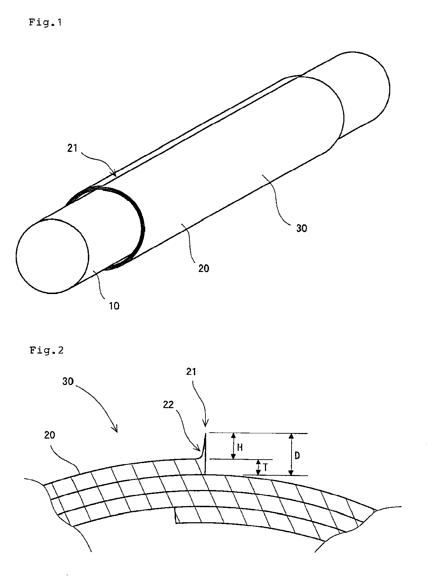

To enhance abrasion resistance of a fluororesin tube, a fluororesin tube having an excellent tensile strength (for example, 80 N/mm$^2$ or more) may be used. The fluororesin tube having an excellent tensile strength can be produced by using a fluororesin film having an excellent tensile strength. More specifically, for example, as shown in a schematic perspective view of Fig. 1, a fluororesin tube 30 can be produced by winding and laminating a fluororesin film 20 having an increased tensile strength on a core material 10, fixing a winding shape through heat fusion (heat fusing), and removing the core material 10. The present inventors have already filed an application with respect to a fluororesin tube 30 (Japanese Unexamined Patent Publication (Kokai) No. 2005-24931). A tensile strength of a fluororesin film 20 can also be increased by an expanding treatment (stretching or orienting treatment). Since it also becomes possible to reduce the wall thickness to 20 $\mu$m or less by the expanding treatment, the expanding treatment also contributes to achieving high image quality without inhibiting a function of an elastic layer of a fixing roll.

However, in case of winding and laminating the fluororesin film 20, level difference due to film thickness occurs at the end-of-winding side 21. Strictly speaking, pressing and heating of the toner become ununiform due to level difference. Therefore, when higher image quality is required, level difference becomes a defect which cannot be neglected. Therefore, the present inventors have made a trial of further reducing the wall thickness of the fluororesin film 20 for the following reason. That is, they considered that it becomes possible to substantially neglect level difference if the wall thickness of the fluororesin film 20 is highly reduced. However, even if the wall thickness of the fluororesin film 20 is highly reduced, it was difficult to completely eliminate trace of level difference of the fixed image.

Thus, the present inventors have intensively studied furthermore and found that level difference at the end-of-winding side 21 of the film 20 becomes larger than the film thickness. This respect will be described in detail with reference to Fig. 2. Fig. 2 is an enlarged side view in the vicinity of the end-of-winding side 21 of Fig. 1. The present inventors have found that, as shown in Fig. 2, at the end-of-winding side 21 of the film, rising 22 of the film is recognized and level difference D drastically becomes larger than the film thickness T.

It is considered that level difference D drastically increases due to properties of the fluororesin film 20. That is, since the fluororesin film 20 is produced through an expanding treatment so as to increase a tensile strength, thereby stress is remained in the shrinkage direction and thermal shrinkage may be caused by heat fusion after winding and laminating. Since pores remain in the fluororesin film 20 after expansion, pores are collapsed by pressing while heating to a temperature of a melting point of the fluororesin or higher after the expanding treatment and before winding. Therefore, shrinkage stress is considerably decreased in heat fusion after winding. However, it is considered that, when slight thermal shrinkage occurs during heat fusion, rising 22, which cannot be neglected, is formed. It has been found that the rising 22 can be decreased by pressing the end-of-winding side 21 of the film 20 toward the core material 10 during heat fusion (heat fusing).

That is, the present inventors have found that, when the rising 22 is decreased, it becomes possible to substantially neglect level difference D and to achieve high image quality, and that it is effective to press the end-of-winding side 21 of the film 20 toward the core material 10 so as to decrease the rising 22, and thus the present invention has been completed.

Therefore, the fluororesin tube of the present invention has a tensile strength of 80 N/mm$^2$ or more in both of a circumferential direction and an axial direction. The fluororesin tube is characterized in that it is produced by winding with two or more turns of a fluororesin film to form a lamination, and that at least an outermost layer is fused to a layer immediately thereunder. A rising height of the fluororesin film at an end-of-winding side is always 0.1 $\mu$m or more and 2.0 $\mu$m or less when measured at any position of the side.

The level difference at the end-of-winding side of the fluororesin tube is preferably more than or equal to sum of the film thickness and 0.1 $\mu$m, and less than or equal to 3.0 $\mu$m (particularly 2.3 $\mu$m) when measured at any position of the side, and such a tube can be produced by winding and laminating a fluororesin film having a thickness of 2.5 $\mu$m or less (particularly 2.0 $\mu$m or less) on a core material. The thickness of the fluororesin tube is, for example, from about 2 to 300 $\mu$m. To ensure a tensile strength of 80 N/mm$^2$ or more of the tube, a fluororesin film having a tensile strength of 80 N/mm$^2$ or more can be wound and laminated. Such a fluororesin film has a densified structure (solid structure), and porosity is, for example, less than 5%. The fluororesin includes, for example, a resin comprising polytetrafluoroethylene.

The fluororesin tube can be produced by pressing the end-of-winding side toward a core material in case of winding with two or more turns of a fluororesin film to form a lamination to the core material and fusing at least outermost layer to a layer immediately thereunder. For example, when a heat resistant sheet is provided along the end-of-winding side and the heat resistant sheet is pulled from the side of the core material, the end-of-winding side can be pressed toward the core material. The heat resistant sheet is preferably a heat resistant resin sheet. In case of using a heat resistant resin sheet, it is recommended to insert a metal foil between the heat resistant resin sheet and the fluororesin film.

The present invention includes a fixing member (fixing roll, fixing belt, etc.) in which a surface layer is formed of the fluororesin tube, and also includes image fixing apparatus comprising the fixing member.

The terms "film" and "sheet" used herein are not intended to limit the thickness.

BRIEF DESCRIPTION OF THE DRAWINGS

Fig. 1 is a schematic perspective view explaining a conventional method for producing a fluororesin tube.
Fig. 2 is an enlarged side view of the essential parts of a conventional fluororesin tube.
Fig. 3 is an enlarged side view of the essential parts showing an example of a fluororesin tube of the present invention.
Fig. 4 is a schematic perspective view showing an example of a method for producing a fluororesin tube of the present invention.
Fig. 5 is a conceptual illustration showing another example of a method for producing a fluororesin tube of the present invention.
Fig. 6 is a schematic sectional view showing a preferred example of a method for producing a fluororesin tube of the present invention.
Fig. 7 is a schematic sectional view showing preferred another example of a method for producing a fluororesin tube of the present invention.
Fig. 8 is a schematic perspective view showing another example of a method for producing a fluororesin tube of the present invention.
Fig. 9 is a conceptual illustration explaining a method for measuring a fluororesin tube.
Fig. 10 is a schematic view showing an example of a measuring chart of surface roughness of a fluororesin tube.
Fig. 11 is a schematic view showing another example of a measuring chart of surface roughness of a fluororesin tube.
Fig. 12 is a laser micrograph of a fluororesin tube of Working Example 1.
Fig. 13 is a laser micrograph of a fluororesin tube of Comparative Example 1.

BEST MODE FOR CARRYING OUT THE INVENTION

In the present invention, a fluororesin tube 30 is produced by winding and laminating a film 20 made of a fluororesin on a core material 10, and heating while pressing the end-of-winding side 21 toward the core material 10 using a proper pressing member. The present invention will now be described in detail by the producing procedure as follows.

(I) Fluororesin

The fluororesin used in the present invention includes, for example, a resin (PTFE-based resin) comprising polytetrafluoroethylene (PTFE). As described hereinafter, the PTFE-based resin can be subjected to an expanding and collapse treatment and the PTFE-based film obtained by subjecting to the expanding and collapse treatment is excellent in a tensile strength and is advantageous so as to enhance abrasion resistance, and is also excellent in flexibility and is advantageous so as to prevent the occurrence of wrinkle.

An amount of PTFE is for example 50 mass% or more, preferably 70 mass% or more, and more preferably 90 mass% or more (particularly 100 mass%), based on the total amount of the entire resin. When the amount of PTFE is insufficient, (a) uniformity of expansion deteriorates to cause density unevenness and thickness unevenness of the film, (b) sticking of a film 20 onto a core material 10 occurs in case of pressing and heating after winding and, furthermore, it is likely to arise, for example, a problem that fine irregularities on the surface of a pressing member are transferred onto the film 20. As the amount of PTFE to be added increases, these problems are minimized. Furthermore, since PTFE has remarkably high releasability, the fluororesin tube 30 containing a large amount of PTFE is less likely to cause a problem even if the use of a release oil is omitted and also applicability of a toner can be widened. Even if a toner such as a polymerized toner, a ground toner or a liquid toner is used, image can be fixed without causing offset.

The resin (other resins) constituting the fluororesin, together with PTFE, may be selected from resins other than the fluororesin, but is preferably selected from among the fluororesin. Examples of preferable other resin include copolymers of tetrafluoroethylene [tetrafluoroethylene-hexafluoropropylene copolymer (FEP), ethylene-tetrafluoroethylene copolymer (ETFA), and tetrafluoroethylene-perfluoloalkyl vinyl ether copolymer (PFA)], polychlorotrifluoroethylene (PCTFE), polyvinylidene fluoride (PVDF), and polyvinyl fluoride (PVF). A particularly preferable other resin is a tetrafluoroethylene copolymer (particularly PFA).

(II) Fluororesin Film 20

In the present invention, a fluororesin tube 30 is produced by using a film 20 which is obtained from the fluororesin and is also excellent in a tensile strength. When the fluororesin film 20 having an excellent tensile strength is used, abrasion resistance of the fluororesin tube 30 can be enhanced. A tensile strength of the fluororesin film 20 is, for example, 80 N/mm$^2$ or more, preferably 200 N/mm$^2$ or more, and more preferably 300 N/mm$^2$ or more. The upper limit of the tensile strength is not specifically limited, but is usually about 600 N/mm$^2$.

The tensile strength means an average of tensile strengths in optional two directions perpendicularly intersecting each other [for example, MD direction and TD direction] and it is recommended that tensile strengths in the above two directions (particularly entire direction) satisfy the above value. The tensile strength can be determined by carrying out a tensile test using a strip-shaped test piece (width: 10 mm) under the conditions of a chuck-to-chuck distance of 50 mm and a testing rate of 100 mm/min.

As the fluororesin film 20 having an excellent tensile strength, a fluororesin film 20 having a densified structure is known. The densified structure is a structure, which does not substantially contain pores therein, formed by a expanding treatment of a film and a collapse treatment (treatment for imparting a densified structure, densification treatment) of pores produced by the expanding treatment. The densified structure is intended to include a structure formed by the other method as long as the structure is the same. The tensile strength of the fluororesin film 20 having a densified structure is remarkably increased by the expanding treatment. Also, since the fluororesin film is produced through the expanding treatment, reduction in wall thickness can also be achieved.

The expanding treatment will now be described in detail taking PTFE as an example. A paste obtained by mixing a fine powder of PTFE with a molding auxiliary agent is molded, followed by removing the molding auxiliary agent, and the resulting molded article being subjected to expanding(stretching or orienting). The expanding treatment is carried out at a high temperature [for example, a temperature which is about 10 to 60°C lower than a melting point of a fluororesin (about 327°C in case of PTFE)] and a high speed (for example, expanding speed: about 30 to 100%/sec). To achieve a predetermined tensile strength, biaxial expanding is employed and also a high expansion ratio (for example, about 900 to 5,000%) is employed. A fluororesin film having a porous structure is produced by the expanding treatment. The porous structure indicates a microstructure of the film and means a structure having a space partitioned by nodes (folded crystals), and fibrils (linear molecule flux derived from the node after dissolving through expanding) connecting these nodes, and is approximately a cobweb-shaped fibrous structure.

Porosity of a porous fluororesin film obtained by expanding is, for example, from about 5 to 95%. Porosity is a value calculated from an apparent density $\rho 1$ (unit: g/cm$^3$, measured in accordance with JIS K 6885) of a fluororesin film and a density $\rho 2$ (unit: g/cm$^3$, 2.2 g/cm$^3$ in case of PTFE) of a fluororesin based on the following equation.

$$\text{Porosity (\%) = (\rho 2 - \rho 1)/ \rho 2 \times 100}$$

After expanding, the expanded (stretched or oriented) film may be baked (sintered), if necessary. The tensile strength can also be increased by baking. A baking temperature is, for example, a temperature which is about 40 to 60°C higher than a melting point of the fluororesin.

The porous fluororesin film contains pores and is therefore not suited for use as a surface layer of a fixing member as it is. Therefore, as described above, pores are collapsed (densifiied). Although a collapse method and conditions are not specifically limited, it is recommended that the film is pressed in the thickness direction, thereby collapsing pores and, for example, a roll press, a belt press or the like can be used. The plane pressure of collapse is often controlled, for example, within a range from about 0.5 to 60 N/mm$^2$. A heating temperature of the film during collapse is often controlled to, for example, a temperature which is about 1 to 100°C higher than a melting point of the fluororesin. Pores can be certainly collapsed by heating to a temperature higher than the melting point. It is recommended that a film temperature is decreased to lower than the melting point before pressure relieving. When the pressure is relieved at a temperature higher than the melting point, the film shrinks and wrinkle is likely to be formed. Also, the collapse treatment may be carried out by several times (for example, 2 times) and the film heating temperature in the collapse treatment before a final treatment may be controlled to a temperature which is about 1 to 100°C lower than the melting point of the fluororesin. It is preferred that the film after subjected to the collapse treatment substantially contain no pores, and the porosity is, for example, less than 5%, preferably 3% or less, and more preferably 1% or less (particularly 0%). When the porosity of the film is 5% or more, the toner is likely deposited or accumulated on the pore parts of the film.

As the above fluororesin film 20 (film used to be wound to produce a fluororesin tube 30), the collapsed film may be used as it is, or a laminate obtained by appropriately laminating the collapsed films may be used.

A thickness T of the fluororesin film 20 is, for example, 2.5 μm or less, preferably 2.0 μm or less, and more preferably 1.6 μm or less. As the thickness of the fluororesin film 20 is more decreased, level difference D of the fluororesin tube 30 can be decreased and a fixed image can be provided with higher image quality. The lower limit of the thickness T is not specifically limited, but is usually about 0.5 μm.

In the fluororesin film 20, the end portion is generally formed by cutting. Push cutting (cutting using a round tooth cutter etc.) is recommended for cutting. In comparison with screw-cutting (cutting using a cutter, a scissors, etc.), the thickness of the film end portion can be decreased by press-cutting and also level difference D in case of forming into a tube 30 can be decreased. The smaller the thickness of a blade used for cutting, the better.

One or both surfaces of the fluororesin film 20 may be subjected to a surface treatment for improving adhesion (corona discharge treatment, chemical etching treatment, excimer laser treatment, etc.). Such a surface treatment can increase adhesion between the respective layers in winding the fluororesin film 20.

(III) Fluororesin Tube 30

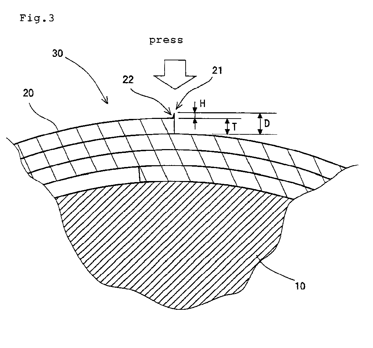

As shown in Fig. 3, a fluororesin tube 30 is produced by winding and laminating the fluororesin film 20 on a core material 10, then heating, and thereby fusing the respective layers of the fluororesin film 20. When no external force is applied in heating, as shown in Fig. 2, rising 22 at the end-of-winding side 21 is formed by thermal shrinkage and level difference D becomes drastically larger than the film thickness T. As described above, the fluororesin film 20 has already been pressed at a temperature equal to or more than a melting point of the fluororesin, and thus thermal shrinkage is considerably decreased. It was surprising that large rising 22 is formed by slight thermal shrinkage. In the present invention, in said heating, the end-of-winding side 21 of the fluororesin film 20 is pressed toward the core material 10 using a suitable pressing member. When heated while pressing, the rising 22 of the end-of-winding side 21 can be decreased, and thus level difference D can be decreased.

Various methods can be employed for the pressing and include, for example, (1) a method comprising inserting a laminate which is obtained by winding and laminating a fluororesin film 20 on a core material 10 (wound laminate) into a mold having a cylindrical cavity and tightening the wound laminate using the mold, (2) a method comprising disposing a sheet-shaped member, which has flexibility and can withstand a heat fusion temperature (hereinafter referred to as a heat resistant sheet), along the end-of-winding side 21 of the wound laminate and pulling the heat resistant sheet from the side of the core material 10, and the like.

In the method using the mold (1), it is recommended that a buffer material (particularly a heat resistant buffer material) is inserted between the mold and the wound laminate. This is because a pressure can be uniformly applied to the end-of-winding side 21. As described hereinafter, in the present invention, it is necessary to suppress level difference D in an extremely high level (for example, 3.0 μm or less). In case of using the mold, it is necessary to enhance dimensional accuracy of the mold (and the core material 10) to the extent capable of satisfying the required level, and this method is therefore not suitable for practical use. Preferably, the method using a heat resistant sheet (2) can be employed.

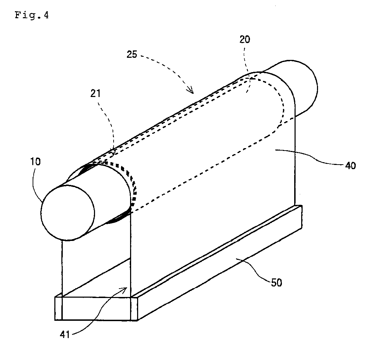

An example (first example) of the method using the heat resistant sheet (2) will now be described with reference to a schematic perspective view shown in Fig. 4. In the example of Fig. 4, after winding and laminating the fluororesin film 20 on the core material 10, a heat resistant sheet 40 is draped with facing the end-of-winding side 21 upward. The end-of-winding side 21 can be covered with the heat resistant sheet 40 by draping the heat resistant sheet 40. A weight 50 is attached to the hanging-down portion 41 of the heat resistant sheet 40 and it is possible to pull the heat resistant sheet 40 from the side of the core material 10. According to the method of Fig. 4, the end-of-winding side 21 can be pressed very simply.

It is not always required to face the end-of-winding side 21 upward, and it is possible to face the end-of-winding side on an appropriate side, such as sideward and downward. In case of facing the end-of-winding side to any direction, the end-of-winding side 21 can be pressed by pulling the heat resistant sheet 40 from the side of the core material 10 to the direction opposite the end-of-winding side 21.

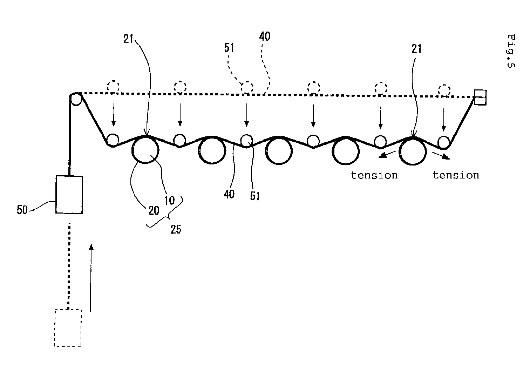

Another example (second example) of the method (2) using a heat resistant sheet will be described with reference to the conceptual illustration of Fig. 5. In the example of Fig. 5, plural laminates obtained by winding and laminating a fluororesin film 20 on a core material 10 (wound laminates 25) are used and plural wound laminate 25 are arranged in order at proper intervals with facing the end-of-winding side upward. Also, a heat resistant sheet 40 is draped over the wound laminates 25 and proper tension is applied to the heat resistant sheet 40 through a weight 50 attached to one end of the sheet. The end-of-winding side 21 can be pressed by moving the heat resistant sheet 40 thus tensioned to the direction of the wound laminates 25 through plural movable rolls 51 disposed behind the sheet (upward in the example of the drawing).

Describing in more detail, movable rolls 51 are moved so as to fit into the space between plural wound laminates 25. Therefore, the heat resistant sheet 40 contacts with the end-of-winding side 21 and also the portion other than the contact portion is set toward the direction obliquely to the core material (obliquely downward direction in the example of the drawing). Since a tension is applied to the heat resistant sheet 40, a tensile force is applied to the contact portion of the heat resistant sheet 40 from the side of the core material (more accurately, from the side obliquely to the core material) and, as a result, it becomes possible to press the end-of-winding side 21 toward the core material 10.

Also in the second example, it is not always required to face the end-of-winding side 21 upward, and it is possible to face the end-of-winding side on an appropriate side such as sideward or downward. When the heat resistant sheet 40 is arranged at the end-of-winding side 21 and the heat resistant sheet 40 is moved to the direction of the wound laminate 25 through movable rolls 51 located behind the sheet, the end-of-winding side 21 can be pressed similar to the example shown in the drawing.

Furthermore, wound laminates 25 may be moved in place of the rolls 51 and, if the rolls 51 are disposed so as to fit into the space between the wound laminates 25 in advance, it is not required to move the rolls 51 and the wound laminates 25.

In both of the first and second examples, the weight 50 is not essential and a tension may be applied to the heat resistant sheet 40 using a proper method. For example, the tension may be applied by a mechanical force with grasping the end of the heat resistant sheet 40 with a clamp.

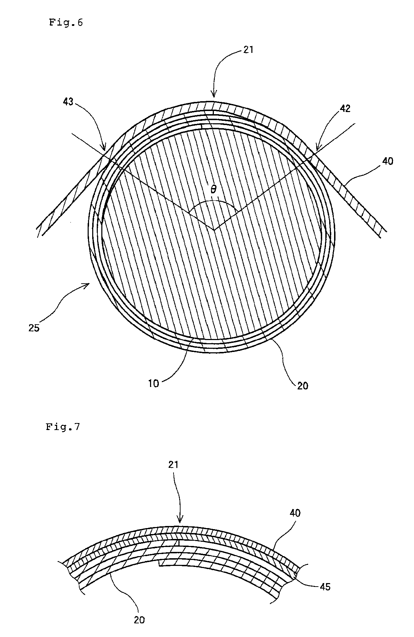

In both of the first and second examples, the heat resistant sheet 40 is preferably contacted with the wound laminates 25 within a relatively wide range. When the contact range increases, the end-of-winding side 21 can be surely pressed. When the range from the contact starting portion 42 to the contact end portion 43 of the heat resistant sheet 40 is expressed by a fan-shaped central angle θ formed by the contact starting portion 42, the contact end portion 43 and center of the core material 10 (see Fig. 6), for example, the angle is 10° or more, preferably 20° or more, and more preferably 30° or more. The upper limit of the central angle θ is not specifically limited, but is usually about 180°.

It is required for the heat resistant sheet 40 to have such flexibility that enables pressing the side 21 of a fluororesin film 20 over the entire side direction without forming a gap, and to have such heat resistance as to enable withstanding a heat fusion temperature (for example, a melting point of a fluororesin or higher) after winding and laminating. Examples of the sheet having excellent flexibility and excellent heat resistance include a heat resistant resin sheet such as a polyimide sheet; and a rolled-down metal product (metal foil) such as an aluminum foil, a copper foil or a stainless steel foil (SUS foil).

The heat resistant sheet 40 is preferably a sheet which causes slight or some dimensional change (heat dimensional change) when heated to the heat fusion temperature. When the heat resistant sheet 40 with a heat dimensional change is heated to the heat fusion temperature, its sag decreases and thus a gap with the side 21 of the fluororesin film 20 can be highly decreased. Examples of the heat resistant sheet 40 having also excellent heat dimensional change property includes a heat resistant resin sheet; and a metal rolled-down product having excellent ductility (high ductility metal foil), such as an aluminum foil or a copper foil (preferably aluminum foil). A high ductility metal foil is hard to handle because it is likely to be torn, and therefore a heat resistant resin sheet is particularly preferable.

In a case that the heat resistant sheet 40 is a heat resistant resin sheet, as shown in the schematic sectional view of Fig. 7, it is recommended to insert a heat resistant release sheet 45 between the heat resistant resin sheet 40 and the fluororesin film 20 by the following reason. That is, the heat resistant resin sheet 40 is excellent in a tensile strength and can apply a high pressing force, but the heat resistant resin sheet easily adheres to the fluororesin film 20. As the heat resistant release sheet 45, the above metal foil can be used. The heat resistant release sheet 45 is used by cutting it into pieces capable of covering the range from the contact starting portion 42 to the contact end portion 43 of the heat resistant resin sheet 40 and then inserting each of the pieces between the heat resistant resin sheet 40 and the fluororesin film 20. The heat resistant resin sheet 40 may be bonded with the heat resistant release sheet (metal foil) 45, if necessary.

The pressing force at the end-of-winding side 21 by the heat resistant sheet 40 can be controlled by the tension to be applied to the heat resistant sheet. For example, it is recommended to apply a pressing forceequivalent to a pressing force obtained when a tension of 10 N/50 cm width or more, preferably 20 N/50 cm width or more is applied under a condition that a central angle θ (see Fig. 6) is 180 degree. As the pressing force increases, level difference D can be decreased. The upper limit of the tension is, for example, about 200 N/50 cm width, and preferably about 100 N/50 cm width. When the pressing force increases too much, the heat resistant sheet becomes easily adheres to the fluororesin film 20.

The thickness of the heat resistant sheet 40 is not specifically limited as long as proper flexibility can be maintained. The thickness is, for example, about 200 μm or less in case of the heat resistant resin sheet and the high ductility metal foil, and is about 100 μm or less in case of the SUS foil.

A winding number of the fluororesin film 20 is 2 or more. When the winding number is less than 2, the portion composed of a single-layered film 20 and the portion composed of two-layered film are formed and a change in a thickness of the tube 30 could increase around doubled and thus image quality may deteriorate. On the other hand, when the winding number is 2 or more (preferably 4 or more, and more preferably 6 or more), the change in a thickness of the tube can be decreased and deterioration of image quality can be prevented.

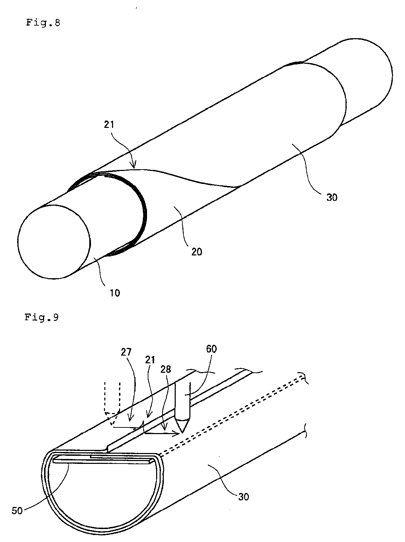

Like the example shown in the drawing, winding of the fluororesin film 20 may be carried out so that the axis direction of the tube 30 is approximately parallel to the end-of-winding side 21. As shown in the schematic perspective view of Fig. 8, the end-of-winding side 21 may be in a spiral form. The fluororesin film 20 is preferably wound so that the axis direction of the tube 30 is approximately parallel to the end-of-winding side 21. If the end-of-winding side 21 is generally parallel to the tube axis, it becomes easy to press the side 21 using the heat resistant sheet 40.

Regarding the wound fluororesin film 20, at least an outermost layer may be fused with a layer immediately thereunder by the following reason. That is, if the outermost layer is fused, the shape of the tube 30 can be maintained. In case of using the wound fluororesin film 20 in the fixing member, if a gap exists between wound layers, slipping (divergence) occurs between the layers and wrinkle is formed in the tube, and thus the respective layers are preferably fused to each other. To fuse the wound fluororesin film 20, the film is usually heated to a temperature equal to or more than a melting point of a fluororesin. Therefore, not only the outermost layer, but also the respective layers are often fused to each other.

As shown in Fig. 3, in the fluororesin tube 30 thus obtained, rising 22 at the end-of-winding side 21 of the film 20 decreases. The height H (value obtained by subtracting a film thickness T from a level difference D) of the rising 22 is about 2.0 $\mu$m or less, preferably about 1.0 $\mu$m or less, and more preferably about 0.8 $\mu$m or less. Also, the height H may be about 0 $\mu$m (for example, 0.1 $\mu$m or more, and particularly 0.3 $\mu$m or more) and, according to the degree of pressing of the side 21, the film thickness at the side 21 may be smaller than the film thickness T at the other portions (that is, the height H may become a negative value). By decreasing the height H of the rising 22, the level difference D at the winding end side of the film 20 can be decreased and thus it becomes possible to form a high quality image. More accurately, the rising height H means a maximum rising height throughout the entire side direction of the side 21 [within paper-feed portion except for lug end (edge) portion of the paper] by the following reason. That is, when the height H is too large even at one portion, trace of level difference is generated at the position in the image.

It is preferred that the level difference D at the end-of-winding side 21 is always 3.0 $\mu$m or less (for example, 2.5 $\mu$m or less) when measured at any position of the side [within paper-feed portion except for lug end portion of the paper]. As the level difference D decreases, the occurrence of trace of level difference can be prevented more highly. When the level difference D is adjusted to 3.0 $\mu$m or less, the occurrence of trace of level difference can be surely prevented on fixing image to a plain paper.

In a case that the recording sheet (transfer material) has high surface smoothness like a glossy paper and an OHP sheet, trace of level difference more easily occurs than in the case of the plain paper. To surely prevent trace of level difference using a recording sheet having high surface smoothness, it is required to further decrease a level difference D. The level difference D is, for example, preferably 2.3 $\mu$m or less, more preferably 2.0 $\mu$m or less, and particularly 1.8 $\mu$m or less.

A method for measurement of the rising height H and the level difference D will be described with reference to Figs. 9 to 11.

(1) As shown in Fig. 9, a glass plate 50 (thickness: about 1 mm) having a width slightly less than a tube inner diameter and nearly the same length as a tube axial length is inserted into the hollow portion of a tube 30 to be measured and the back surface (inner surface of the tube) of the end-of-winding side 21 is closely contact with the glass plate 50 (sample for measurement), while preventing the occurrence of sucking of an air and wrinkle.

(2) Scanning is carried out by moving measuring stylus 60 of a surface roughness tester ["SV-600" manufactured by Mitutoyo Corporation] from an upper flat portion 27 to a lower flat portion 28 of a wound tube 30 in a direction perpendicular to the end-of-winding side 21. Measuring conditions are as follows: measuring length: 4.8 mm, scanning rate: 0. 5 mm/s, type of evaluation curve: P, standard length: 0.8 mm, interval number: 5, evaluation length: 4.0 mm, pitch: 0.5 $\mu$m, auxiliary scanning: 0.4 mm, and subsequent scanning: 0. 4 mm. With respect to the resulting measuring chart (abscissa axis: stylus migration length, ordinate axis: stylus height), inclination correction is carried out so that portions corresponding to the upper flat portion 27 and the lower flat portion 28 become nearly horizontal.

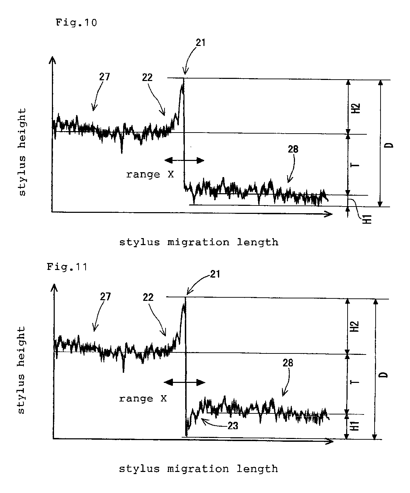

(3) Fig. 10 and Fig. 11 are graphs showing an example of a typical measuring chart. The chart of Fig. 10 starts at the upper flat portion 27 and the stylus height drastically decreases at level difference 21 after rising 22, and then the lower flat portion 28 starts immediately. In the chart of Fig. 11, dropping 23 is observed between the level difference 21 and the lower flat portion 28. In both cases of Fig. 10 and Fig. 11, an arbitrary range with a 300 $\mu$m width in the direction of the abscissa axis is assumed in the measuring chart. The range in which a difference between maximum height and a minimum height in this range becomes maximum in the measuring chart denotes a level difference range X, and a difference between a maximum height and a minimum height within this level difference range denotes a level difference D. Also, a difference between an average height of the upper flat portion 27 and an average height of the lower flat portion 28 denotes a film thickness T. Then, the rising height H is determined by the following equation.

$$H = D - T \ (= H1 + H2)$$

Ordinarily the results of the measurement of the film thickness carried out within 5 mm from the side 21 using Laser Hologage ["LGH-110" manufactured by Mitutoyo Corporation] nearly agree with the results of the measurement of the thickness T obtained using the surface roughness tester.

(4) A lot of positions (for example, about 20 to 30 positions in case of feeding an A4 paper or an A3 paper) are selected at random from the portions contacted with a recording sheet (paper feeding portion, for example, portion corresponding to the short side portion of an A4 paper or an A3 paper) of the side 21 and a level difference D and a rising height H are determined with respect to each position in the same manner as in the above (2) to (3), and then the maximum value is taken as the level difference D and the rising height H of the tube 30.

The film thickness T required to set the level difference D to 3.0 $\mu$m or less (preferably 2.5 $\mu$m or less) is, for example, about 2.5 $\mu$m or less (preferably 2.2 $\mu$m or less). Also, the film thickness T required to set the level difference D to 2.3 $\mu$m or less (preferably 2.0 $\mu$m or less, and particularly 1.8 $\mu$m or less) is, for example, about 2.0 $\mu$m or less (preferably 1.8 $\mu$m or less, and particularly 1.6 $\mu$m or less).

As is apparent from the above equation (H = D - T), the lower limit of the level difference D is equal to sum of the lower limit of the rising height H and the film thickness T.

The fluororesin tube 30 of the present invention is also excellent in a tensile strength because the fluororesin film 20 having a high tensile strength is wound and laminated. The tensile strength of the fluororesin tube 30 is 80 N/mm$^2$ or more, preferably 100 N/mm$^2$ or more, and more preferably 140 N/mm$^2$ or more, even when measured both in the circumferential direction and the axial direction. Abrasion resistance of the tube 30 can also be enhanced by increasing the tensile strength of the fluororesin tube 30.

The tensile strength of the fluororesin tube 30 is measured using a strip-shaped test piece obtained by cutting open the tube 30. The measuring procedure except for cutting open the tube 30 is the same as that of the tensile strength of the fluororesin film 20.

The maximum wall thickness (tube thickness) of the fluororesin tube 30 may be appropriately decided according to the kind of an image fixation apparatus. For example, the maximum wall thickness is 2 $\mu$m or more and may be 10 $\mu$m or more, or 30 $\mu$m or more in case of an apparatus for application of full-color high image quality. As the tube thickness increases, it becomes easy to produce the tube 30. However, when the thickness of the tube 30 excessively increases, elasticity of a fixing member made of the tube 30 deteriorates and image quality tends to deteriorate. Also, power consumption of the image fixing apparatus increases. Therefore, the smaller the thickness of the tube 30, the better, and it is recommended that the thickness of the tube is adjusted, for example, to 50 $\mu$m or less, preferably 30 $\mu$m or less, and more preferably 10 $\mu$m or less. Since abrasion resistance is considered to be important in case of an apparatus for application of monochromatic high-speed copying, the maximum wall thickness (tube thickness) of the fluororesin tube 30 is, for example, 30 $\mu$m or more and may be 100 $\mu$m or more, or 300 $\mu$m or more.

As described hereinafter, the fluororesin tube 30 is sometimes used as a fixing member covering on the outer peripheral surface of an elastic layer and bonding to it. In such a case, it is recommended that the inner surface of the fluororesin tube 30 is subjected to a surface treatment so as to improve adhesion because adhesion between the fluororesin tube 30 and the elastic layer is generally poor. In the surface treatment, various known treatments such as corona discharge treatment, chemical etching treatment and excimer laser treatment can be employed.

(IV) Fixing Member, Image Fixing Apparatus

The fluororesin tube 30 of the present invention can be advantageously used as a surface layer member of a fixing member (for example, fixing roll, fixing belt, etc.). When the fluororesin tube 30 of the present invention is used, durability of the fixing member can be enhanced because of excellent abrasion resistance. Also, the fluororesin tube of the present invention can contribute to achieve high image quality because rising 22 is minimized.

For example, in case of using the fixing member for monochromatic printing, the elastic layer is not always required. In case of using the fixing member for color printing, image quality drastically deteriorates when the elastic layer does not exist. Therefore, particularly in case of using for color printing, a fixing member having the elastic layer is used. The elastic layer has a shape such as roll shape or belt shape according to the shape of the fixing member. The fluororesin tube 30 is placed on the outer peripheral surface of the elastic layer to cover and bonds to it. In a case that the elastic layer does not exist, the fluororesin tube 30 is placed on the outer peripheral surface of a substrate having a roll or belt shape to cover and bonds to it.

When the outer peripheral surface of the elastic layer or the substrate is covered with the fluororesin tube 30, a ratio "outer diameter of fluororesin tube 30 after covering" / "outer diameter of fluororesin tube before covering", which is named diameter expansion ratio of the fluororesin tube 30, is preferably set to, for example, from about 1.0 to 1.1. When the diameter expansion ratio is too small, wrinkle is likely to form on the roll surface. On the other hand, when the diameter expansion ratio is too large, the tube 30 may be easily broken or cause deformation or wrinkle.

As the material of the elastic layer, known materials used in a fixing roll or a fixing belt, for example, a silicone rubber, a silicone foamed rubber and a fluororubber can be used. The hardness of the elastic layer is, for example, from about 1 to 90 degrees (durometer type A). To the elastic layer, various additives (filler, etc.) may be added so as to enhance heat resistance, conductivity, electrostatic property, thermal conductivity and the like. The thickness of the elastic layer can be appropriately selected within a range from 50 $\mu$m to 50 mm.

The fixing member can be utilized as an image fixing unit member of an image fixing apparatus (copier, printer, etc.).

In the present invention, since a tube 30 is formed by winding and laminating a fluororesin film 20 having an excellent tensile strength, the resulting tube is excellent in abrasion resistance. Moreover, when the fluororesin film 20 having an excellent tensile strength is wound and laminated, a level difference D at the end-of-winding side 21 tends to increase. However, according to the present invention, a rising 22 at the end-of-winding side 21 is decreased, and thus the level difference D can be decreased and an image having high image quality can be formed.

EXAMPLES

The present invention is more specifically illustrated by the following examples. It is to be understood that the present invention is not limited to the examples, a person skilled in the art can practice various design variations made in accordance with the purports described hereinbefore and hereinafter, and that the variations are also included in the technical scope of the present invention.

(I) Fluororesin Film 20

A fluororesin film 20 was produced in the following manner described in Production Examples 1 to 3.

Production Example 1

A PTFE fine powder ["Fluon CD123" manufactured by Asahi Glass Co., Ltd.] and a molding auxiliary agent were mixed and the resulting paste was extruded, rolled-down and then dried to remove the molding auxiliary agent, and thus a PTFE tape (unbaked tape) having a thickness of 0.16 mm and a width of 150 mm was produced. The PTFE tape (unbaked tape) thus obtained was first expanded at an expanding ratio of 26 times (2,500%) in the TD direction and then expanded at an expanding ratio of 25 times (2,400%) in the MD direction under the conditions of an expanding temperature of 300°C and an expanding rate of 50%/sec. While holding on four sides, the expanded tape was heated (baked) at a temperature of 375°C for 15 minutes to obtain an expanded porous PTFE film (porosity: 80%, thickness: 6.0 $\mu$m). The expanded porous PTFE film was supplied to a calender rolling device, and the film was pressed (collapsed) under the conditions of a roll temperature of 70°C, a surface pressure of 8 N/mm$^2$ (value calculated under the conditions of a nip width of 5 mm) and a feed rate of 6.0 m/min (first collapse treatment) to obtain a white turbid first collapse film having porosity of 2% and a thickness of 1.4 $\mu$m. The first collapse film thus obtained was interposed between two polyimide films ["UPILEX 20S" manufactured by UBE INDUSTRIES, LTD.] followed by hot-pressing under the conditions of a press plate temperature of 400°C and a surface pressure of 10 N/mm$^2$ with a hot press device for 5 minutes (second collapse treatment), and then cooling the press plate and the sample to room temperature over 60 minutes while maintaining a surface pressure to obtain a PTFE film A (fluororesin film 20). Characteristics (porosity, thickness and tensile strength) of the PTFE film A are shown in Table 1 below.

Production Examples 2 to 3

In the same manner as in Production Example 1, except that the thickness of the PTFE tape (unbaked tape) is changed to 0.23 mm (Production Example 2) or 0.3 mm (Production Example 3), each PTFE film (fluororesin film 20) was obtained. Characteristics (porosity, thickness and tensile strength) of a PTFE film B obtained in Production Example 2 and a PTFE film C obtained in Production Example 3 are shown in Table 1 below.

(II) Fluororesin Tube 30

A fluororesin tube 30 was produced in the following manner described in working Examples 1 to 4 and Comparative Examples 1 to 3.

Working Example 1

After subjecting one surface of the PTFE film A obtained in Production Example 1 to a corona discharge treatment (condition: 100 W/m$^2$·min), the film was wound on a cylindrical shaped core material 10 (name of the core material: core material α, outer diameter: 25.9 mm, axial length: 540 mm) made of SUS304 so that the end-of-winding side 21 is parallel to an axial direction of a core material (core metal) 10 (approximately rolled sushi (vinegared rice rolled in dried laver)-shaped) as shown in Fig. 4. More specifically, the film was wound 9.1 times [a state where the film is wound 9 times (9-layered) and the 10th layer is only formed from a portion of film with a length of 0.1 times the circumferential length] while facing the surface subjected to the corona discharge treatment to inside and arranging the MD direction of the PTFE film A in the circumferential direction of the core material. And then the wound film was held on by attaching a ring-shaped stopper to both ends in the axial direction of the core material 10. The end-of-winding side 21 was covered with an aluminum foil having a width of 50 mm and a length of 500 mm ["A3003H-H18" manufactured by Showa Denko K.K.] in a state of being faced upward, and then covered with a polyimide sheet 40 having a width of 160 mm and a length of 510 mm ["UPILEX 50S" manufactured by Ube Industries, Ltd.]. A weight 50 (prism made of SUS, weight: 5.0 kg) was attached (see Fig. 4, tension: 49 N/50 cm width, central angle θ: 180 degrees) to the hanging-down portion 41 in the width direction of the polyimide sheet 40, and then the resulting one was placed in an oven maintained at a temperature of 400°C and heated (baked) for 30 minutes. After cooling, the polyimide sheet 40 with the weight 50, the aluminum foil and the stopper were removed and the core material 10 was extracted to obtain a PTFE tube A-1 (fluororesin tube 30).

Comparative Example 1

In the same manner as in working Example 1, except that pressing of the end-of-winding side using the aluminum foil and the polyimide sheet was omitted, a PTFE tube A-3 was obtained.

Working Examples 2 to 3 and Comparative Example 2

In the same manner as in Working Example 1 and Comparative Example 1, except that the kind of the PTFE film, and presence or absence of pressing of the end-of-winding side were changed as shown in Table 1 below, a PTFE tube B-1 (Working Example 2), a PTFE tube C (Working Example 3) and a PTFE tube B-2 (Comparative Example 2) were produced.

Working Example 4

In the same manner as in Working Example 1, except that the outer diameter of the core material was changed to 30.7 mm (name of the core material: core material β), a PTFE tube A-2 was produced.

Comparative Example 3

In the same manner as in Comparative Example 1, except that the outer diameter of the core material was changed to 30.7 mm (name of the core material: core material β), a PTFE tube A-4 was produced.
Characteristics [inner diameter, maximum wall thickness (tube thickness), thickness of the 9-layered portion, tensile strength, rising height H (maximum value) and level difference D (maximum value)] of PTFE tubes obtained in the above Working Examples and Comparative Examples are shown in Table 1 below. The axial length of the PTFE tube was 480 mm in all examples.
Using PTFE tubes of the above Working Examples and Comparative Examples, fixing members were produced and printed images were evaluated as described below.

(III) Fixing Member

Fixing Roll:

Using PTFE tubes obtained in Working Examples 1 to 3 and Comparative Examples 1 to 2, a fixing roll was produced in the following manner.
That is, one end of each PTFE tube was closed with a clip and a Na/naphthalene complex solution ["Tetra H" manufactured by Junkosya Inc.] at a temperature of 25°C was poured into the tube and, after maintaining for 3 seconds, the solution was discharged. Subsequently, methanol, water and methanol were sequentially poured into the tube and, after maintaining for 10 seconds in all cases, the solution was discharged. After air-drying, the inside of the tube was coated with a primer ["DY39-051" manufactured by Dow Corning Toray Co., Ltd.] and the tube was attached to the inside of a mold for roll forming, having an inner diameter of 26.7 mm. Furthermore, an aluminum core axis (outer diameter: 25.5 mm, core length: 410 mm) was put in the center of the inside of the PTFE tube, and a silicone rubber ["KE-1356" manufactured by Sin-Etsu Chemical Co., Ltd.] was injected between the PTFE tube and the aluminum core axis, and the tube was thermally cured at a temperature of 130°C for 30 minutes, and then the tube was secondary-cured at a temperature of 200°C for 4 hours to fabricate a fixing roll in which a surface layer was formed of the PTFE tube.

Fixing Belt:

Using PTFE tubes obtained in Example 4 and Comparative Example 3, a fixing belt was produced in the following manner.

That is, the outside wall of a cylindrical core metal (made of SUS304, outer diameter: 30.0 mm, axial length: 500 mm) was coated with a polyimide varnish ["U varnish S" manufactured by UBE INDUSTRIES, LTD.] and the cylindrical core metal was passed through a die having an inner diameter of 31.0 mm to form a coating film of a polyimide varnish on the cylindrical core metal. After heating at a temperature of 300°C for 30 minutes, the cylindrical core metal was removed to obtain a polyimide tube having a thickness of 50 $\mu$m, an outer diameter of 30.1 mm and a length of 400 mm. After subjecting the external surface of the polyimide tube thus obtained to a corona discharge treatment (condition: 100 W/m$^2$•min), a primer ["DY39-012" manufactured by Dow Corning Toray Co., Ltd.] was coated in a thickness of about 2 $\mu$m, and then a core metal (made of SUS304, outer diameter: 29.9 mm, axial length: 500 mm) was inserted into hollow of a polyimide tube.

In the same manner as in case of the fixing roll, a PTFE tube subjected to an inner surface treatment and a primer treatment was attached to the inner surface of a cylindrical mold (made of SUS304, inner diameter: 31.2 mm, axial length: 500 mm). The core metal covered with the polyimide tube was inserted into the cylindrical mold and a silicone rubber ["KE-1356" manufactured by Sin-Etsu Chemical Co., Ltd.] was injected between the PTFE tube and the polyimide tube, and the tube was thermally cured at a temperature of 130°C for 30 minutes and then secondary-cured at a temperature of 200°C for 4 hours. The cylindrical mold and the core metal were removed to obtain a fixing belt [maximum wall thickness (total thickness of a polyimide layer, a silicone rubber layer and a PTFE layer) : 65 $\mu$m, outer diameter: 31.2 mm, length: 343 mm] in which a surface layer is formed of a PTFE tube.

(IV) Evaluation of Image

Fixing Roll:

Each of fixing rolls of the Working Examples or Comparative Examples was mounted to a commercially available color printer ["DocuPrintC2220" manufactured by Fuji Xerox Co., Ltd.] and an entire surface solid image was printed on a recording sheet (plain paper, glossy paper or an OHP sheet). And then it was visually checked whether or not trace occurred on a printed image due to the level difference on the surface of the fixing roll.

Fixing Belt:

A fixing unit was took out of a color printer ["DocuPrintC2220" manufactured by Fuji Xerox Co., Ltd.]. The fixing unit was attached to a pedestal, and then a gear attached to a fixing roll shaft and a gear attached to an axis of an external motor were engaged so as to enable motor drive to be transmitted directly to the fixing roll to fabricate a bench evaluation machine in which a fixing roll and a fixing belt of a fixing unit were able to be rotatably driven in a nip state. Also, a halogen heater lamp was attached to the inside of the fixing roll so as to enable the halogen heater lamp to turn on/off cooperatively with a temperature sensor, and thus making it possible to maintain the temperature of the surface of the fixing roll at a predetermined temperature. Consequently, it became possible to rotatably drive in a state where the surface of the fixing roll was maintained at high temperature.

Each of fixing belts of the Working Examples or Comparative Examples was mounted on the bench evaluation machine and a fixing roll was rotatably driven (48 rpm) with maintaining the surface temperature of the fixing roll was maintained at 190°C. A recording sheet (plain paper, glossy paper or OHP sheet), on which unfixed toner was deposited, was passed through the space between nips with facing the surface, on which the toner was deposited, with the side of the fixing belt, thereby printing a solid image. It was visually checked whether or not trace was generated on the printed image due to the level difference on the surface of the fixing roll.

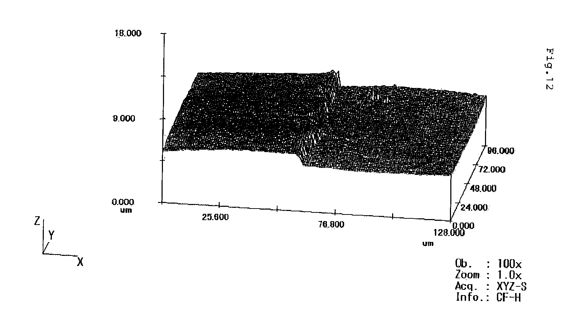

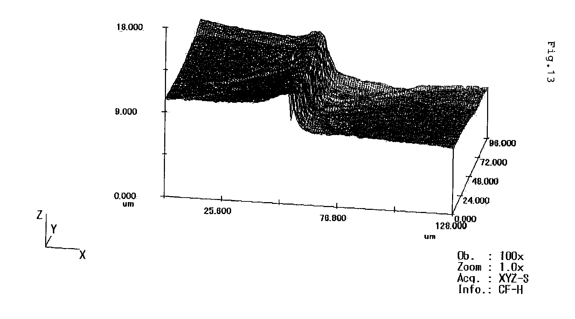

The results are shown in Table 1. Also, photographs of each end-of-winding side 21 of the PTFE tube A-1 of Working Example 1 and the PTFE tube A-3 of Comparative Example 1 were taken using a laser microscope ["OLS-3000" manufactured by Olympus Corporation, image: bird's eye view display, display method: Mesh, line spacing: 4, height coefficient: 5.0, viewpoint position: X=20°, Y=80°]. The resulting photographs are shown in Fig. 12 (Working Example 1) and Fig. 13 (Comparative Example 1).

[Table 1]

| | | | Working Example 1 | Working Example 2 | Working Example 3 | Working Example 4 | Comparative Example 1 | Comparative Example 2 | Comparative Example 3 |
|---|---|---|---|---|---|---|---|---|---|
| Fluororesin film 20 | Name | | PTFE film A | PTFE film B | PTFE film C | PTFE film A | PTFE film A | PTFE film B | PTFE film A |
| | Thickness T (μm) | | 1.2 | 1.7 | 2.2 | 1.2 | 1.2 | 1.7 | 1.2 |
| | Tensile strength (N/mm²) | MD direction | 300 | 250 | 130 | 300 | 300 | 250 | 300 |
| | | TD direction | 550 | 270 | 90 | 550 | 550 | 270 | 550 |
| | | Average | 425 | 260 | 110 | 425 | 425 | 260 | 425 |
| | Porosity (%) | | 0 | 0 | 0 | 0 | 0 | 0 | 0 |
| Fluororesin tube 30 | Name | | PTFE tube A-1 | PTFE tube B-1 | PTFE tube C | PTFE tube A-2 | PTFE tube A-3 | PTFE tube B-2 | PTFE tube A-4 |
| | Core material to be used | | Core material α | Core material α | Core material α | Core material β | Core material α | Core material α | Core material β |
| | Inner diameter (mm) | | 25.9 | 25.9 | 25.9 | 30.8 | 25.9 | 25.9 | 30.8 |
| | Tube thickness (μm) | | 12.0 | 17.0 | 22.0 | 12.0 | 12.0 | 17.0 | 12.0 |
| | Thickness of 9-layered portion (μm) | | 10.8 | 15.3 | 19.8 | 10.8 | 10.8 | 15.3 | 10.8 |
| | Tensile strength (N/mm²) | Circumferential direction | 180 | 150 | 120 | 180 | 180 | 150 | 180 |
| | | Axial direction | 200 | 180 | 90 | 200 | 200 | 180 | 200 |
| | Pressed or not pressed at side 21 | | Pressed | Pressed | Pressed | Pressed | Not pressed | Not pressed | Not pressed |
| | Rising height H (Maximum value) (μm) | | 0.6 | 0.3 | 0.4 | 0.6 | 2.1 | 4.0 | 2.1 |
| | Level difference D (Maximum value) (μm) | | 1.8 | 2.0 | 2.6 | 1.8 | 4.3 | 5.7 | 4.3 |
| Fixing member | Kind | | Roll | Roll | Roll | Belt | Roll | Roll | Belt |
| Results of printing (trace of level difference is observed or not observed) | Plain paper | | Not observed | Not observed | Not observed | Not observed | Observed | Observed | Observed |
| | Glossy paper | | Not observed | Not observed | Observed | Not observed | Observed | Observed | Observed |
| | OHP sheet | | Not observed | Not observed | Observed | Not observed | Observed | Observed | Observed |

As is apparent from Table 1 and Fig. 13, when a fluororesin tube 30 is produced without pressing the side 21, the side 21 drastically rises and a level difference D increases (Comparative Examples 1 to 3). Therefore, even if a ultra-thin PTFE film having a thickness of about 1.2 μm is used, trace of level difference is generated (Comparative Example 1).

To the contrary, as is apparent from Table 1 and Fig. 12, in a fluororesin tube 30 produced while pressing the side 21, rising of the side 21 decreases and also level difference D decreases. As a result, in case of printing on a plain paper, printing can be carried out without generating trace of level difference (Working Examples 1 to 4). Particularly in Working Examples 1, 2 and 4 using comparatively thin PTFE films, since level difference D further decreases, printing can be carried out without generating trace of level difference even in case of printing on a glossy paper or an OHP sheet.

INDUSTRIAL APPLICABILITY

The fluororesin tube 30 of the present invention can be advantageously used as a surface layer member of a fixing member (for example, fixing roll, fixing belt, etc.). The fixing member can be utilized as an image fixing unit member of an image fixing apparatus (copier, printer, etc.).

**Claims**

1.  A fluororesin tube produced by winding with two or more turns of a fluororesin film having a thickness of 2.5 $\mu$m or less to form a lamination, at least an outermost layer of the tube being fused to a layer immediately thereunder, wherein a tensile strength of the tube is 80 N/mm$^2$ or more in both of a circumferential direction and an axial direction, and a rising height of the fluororesin film at an end-of-winding side is always 0.1 $\mu$m or more and 2.0 $\mu$m or less when measured at any position of the side.

2.  The fluororesin tube according to claim 1, wherein a level difference of the end-of-winding side of the fluororesin tube is always less than or equal to 3.0 $\mu$m, and more than or equal to sum of the film thickness and 0.1 $\mu$m when measured at any position of the side.

3.  A fluororesin tube produced by winding with two or more turns of a fluororesin film having a thickness of 2.0 $\mu$m or less to form a lamination, at least an outermost surface layer of the tube being fused to a layer immediately thereunder, wherein
    a tensile strength of the tube is 80 N/mm$^2$ or more in both of a circumferential direction and an axial direction, and a rising height of the fluororesin film at an end-of-winding side is always 0.1 $\mu$m or more and 2.0 $\mu$m or less when measured at any position of the side.

4.  The fluororesin tube according to claim 3, wherein a level difference of the end-of-winding side of the fluororesin tube is always less than or equal to 2.3 $\mu$m, and more than or equal to sum of the thickness and 0.1 $\mu$m when measured at any position of the side.

5.  The fluororesin tube according to claim 1, wherein a thickness of the fluororesin tube is 2 to 300 $\mu$m.

6.  The fluororesin tube according to claim 1, which is produced by winding with two or more turns of a fluororesin film having a tensile strength of 80 N/mm$^2$ or more to form a lamination, and then fusing at least an outermost surface layer of the tube to a layer immediately thereunder.

7.  The fluororesin tube according to claim 1, wherein the fluororesin film has a densified structure.

8.  The fluororesin tube according to claim 1, wherein the fluororesin film has a porosity of less than 5%.

9.  The fluororesin tube according to claim 1, wherein the fluororesin film is a film made of a resin comprising polytetrafluoroethylene.

10. A fixing roll comprising a surface layer formed of the fluororesin tube according to claim 1.

11. A fixing belt comprising a surface layer formed of the fluororesin tube according to claim 1.

12. An image fixing apparatus comprising the fixing roll according to claim 10.

13. An image fixing apparatus comprising the fixing belt according to claim 11.

14. A method for producing a fluororesin tube, which comprises winding with two or more turns of a fluororesin film having a thickness of 2.5 $\mu$m or less and a tensile strength of 80 N/mm$^2$ or more on a core material to form a lamination, heating an end-of-winding side while pressing toward a core material, thereby fusing at least an outermost surface layer of the tube to a layer immediately thereunder,
    and thus adjusting rising height of the fluororesin film at the end-of-winding side to be always 0.1 $\mu$m or more and 2.0$\mu$ m or less when measured at any position of the side, and adjusting a level difference of end-of-winding side of the fluororesin tube to be always more than or equal to sum of the film thickness and 0.1 $\mu$m, and less than or equal to 3.0 $\mu$m when measured at any position of the side.

15. The method for producing a fluororesin tube according to claim 14, which comprising providing a heat resistant sheet along the end-of-winding side and pulling the heat resistant sheet from the side of the core material, thereby pressing the end-of-winding side toward the core material.

16. The method for producing a fluororesin tube according to claim 15, wherein the heat resistant sheet is a heat resistant resin sheet and the heat resistant sheet is pulled from the side of the core material after inserting a metal foil between the heat resistant resin sheet and the fluororesin film.

Fig.1

21

30

20

10

Fig.2

30

20

22

21

H

D

T

Fig.3

Fig.4

Fig.5

Fig.6

Fig.7

Fig.8

Fig.9

Fig.10

stylus height

stylus migration length

Fig.11

stylus height

stylus migration length

Fig.12

Ob.  : 100x
Zoom : 1.0x
Acq. : XYZ-S
Info.: CF-H

Fig.13

## INTERNATIONAL SEARCH REPORT

| International application No. |
| --- |
| PCT/JP2006/309673 |

A. CLASSIFICATION OF SUBJECT MATTER
*G03G15/20*(2006.01), *B29C53/58*(2006.01), *B29K27/12*(2006.01), *B29L23/00* (2006.01)

According to International Patent Classification (IPC) or to both national classification and IPC

B. FIELDS SEARCHED

Minimum documentation searched (classification system followed by classification symbols)
*G03G15/20*(2006.01), *B29C53/58*(2006.01), *B29K27/12*(2006.01), *B29L23/00* (2006.01)

Documentation searched other than minimum documentation to the extent that such documents are included in the fields searched
Jitsuyo Shinan Koho         1922-1996    Jitsuyo Shinan Toroku Koho    1996-2006
Kokai Jitsuyo Shinan Koho   1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2005-024931 A (Japan Gore-Tex Inc.), 27 January, 2005 (27.01.05), Par. Nos. [0067], [0080], [0082], [0094] & WO 2005/003866 A1 | 1-16 |
| A | JP 2003-066662 A (Bando Chemical Industries, Ltd.), 05 March, 2003 (05.03.03), Claim 1; Par. Nos. [0032], [0039], [0040], [0042], [0045], [0049] (Family: none) | 1-16 |
| A | JP 2003-254324 A (Japan Gore-Tex Inc.), 10 September, 2003 (10.09.03), Claim 3 & WO 2003/056396 A1 | 1-16 |

| ☒ Further documents are listed in the continuation of Box C. | ☐ See patent family annex. |
| --- | --- |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 05 June, 2006 (05.06.06) | 13 June, 2006 (13.06.06) |

| Name and mailing address of the ISA/ Japanese Patent Office | Authorized officer |
| --- | --- |
| Facsimile No. | Telephone No. |

Form PCT/ISA/210 (second sheet) (April 2005)

**INTERNATIONAL SEARCH REPORT**

| International application No. |
| PCT/JP2006/309673 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 07-205274 A (Canon Inc.), 08 August, 1995 (08.08.95), Par. Nos. [0008], [0012]; Fig. 3 (Family: none) | 1-16 |
| A | JP 09-258583 A (Canon Inc.), 03 October, 1997 (03.10.97), Par. Nos. [0036], [0041], [0047]; Fig. 8 & US 6101362 A | 1-16 |
| A | JP 2000-098772 A (Fuji Xerox Co., Ltd.), 07 April, 2000 (07.04.00), Full text; all drawings (Family: none) | 1-16 |
| A | JP 2003-066733 A (Hitachi Koki Co., Ltd.), 05 March, 2003 (05.03.03), Full text; all drawings (Family: none) | 1-16 |
| A | JP 06-246829 A (Idemitsu Petrochemical Co., Ltd.), 06 September, 1994 (06.09.94), Par. No. [0025] & EP 0616880 A3    & US 5707478 A | 14-16 |
| A | JP 34-007236 B1 (Fuji Photo Film Co., Ltd.), 20 August, 1959 (20.08.59), Left column, lines 25, 26 (Family: none) | 14-16 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 58043740 B

• JP 2005024931 A

**Non-patent literature cited in the description**

• **KITAZAWA.** Required characteristics and Technical Improvement Point of Fixing Rubber Roll. *Journal of The Society of Electrophotography of Japan,* 1994, vol. 33 (1), 57-65